# EUROPEAN PATENT APPLICATION

(11) **EP 4 778 887 A1**
(43) Date of publication of application: **22.07.2026**
(21) Application number: 24865021.0
(22) Date of filing: 17.06.2024
(51) Int. Cl.: C01B 32/956, C04B 35/565

(54) **SILICON CARBIDE POWDER AND PRODUCTION METHOD FOR SAME**

(30) Priority: 11.09.2023 JP 2023146809
(71) Applicant: Fujimi Incorporated, Kiyosu-shi, Aichi 452-8502 (JP)
(72) Inventor: MASUDA Yuji, Kiyosu-shi, Aichi 452-8502 (JP); SATO Mina, Kiyosu-shi, Aichi 452-8502 (JP); USHIDA Naoki, Kiyosu-shi, Aichi 452-8502 (JP); TAGUCHI Souma, Kiyosu-shi, Aichi 452-8502 (JP); HIRATA Naomichi, Kiyosu-shi, Aichi 452-8502 (JP); ISAYAMA Takuya, Kiyosu-shi, Aichi 452-8502 (JP); INAGAKI Haruna, Kiyosu-shi, Aichi 452-8502 (JP); BAN Naomi, Kiyosu-shi, Aichi 452-8502 (JP)
(74) Representative: Maiwald GmbH
(86) International application number: PCT/JP2024/021910
(87) International publication number: WO 2025/057514

(57) **Abstract**

Provided are a silicon carbide powder that hardly causes thickening even if it is added to a dissimilar material in a liquid form such as a liquid resin or a molten metal, and a method for producing the same. The silicon carbide powder is a silicon carbide powder containing primary particles of silicon carbide having an *α-*type crystal system, the primary particles of the silicon carbide contain, on surfaces thereof, at least one element selected from aluminum, yttrium, and ytterbium, and the Hausner ratio of the silicon carbide powder is 2.1 or less.

## Description

### TECHNICAL FIELD

The present invention relates to a silicon carbide powder and a method for producing the same.

### BACKGROUND ART

Since silicon carbide (SiC) has many excellent characteristics, such as high thermal conductivity, microwave exothermic characteristics, low specific gravity, low thermal expansion coefficient, and high mechanical characteristics (hardness, rigidity), it is sometimes used by mixing it, as a material to impart the characteristics, with a dissimilar material. For example, there is a case where silicon carbide is added as a heat-dissipating filler or a resin reinforcement to dissimilar materials such as a resin, or a case where silicon carbide and dissimilar materials such as a metal are mixed to produce exothermic materials or metal matrix composites (MMC).

Such as in the case where the silicon carbide powder is mixed with a dissimilar material in a liquid form (e.g., liquid resin, molten metal) to prepare a mixture, and from this mixture, a composite material is produced, if the shape of a primary particle of silicon carbide contained in the powder is not a shape having high sphericity (shape having a small number of corners present on a surface of a particle) but a shape having low sphericity (shape having a large number of corners present on a surface of a particle), thickening takes place by the addition of the silicon carbide powder, and there was a risk that the viscosity of the mixture would become markedly higher than the viscosity of the dissimilar material in a liquid form. On that account, there was a risk that problems would occur, such as difficulty in highly filling the dissimilar material in a liquid form with the silicon carbide powder, and poor processability of the mixture when molding the mixture.

Silicon carbide produced by using an Atchison furnace is silicon carbide having an α-type crystal system (α-SiC), but it is made powdery by a grinding method, and therefore, the resulting primary particle of the silicon carbide had a shape of low sphericity. As a method for removing corners from the primary particle surface of silicon carbide having a shape of low sphericity to obtain a shape of high sphericity, a frictional crushing method using a stone mill or the like, a particle collision method using a jet mill or the like (see, for example, Patent Literature 1), or the like is known.

However, silicon carbide has high hardness, and it is not easy to sufficiently remove the corners from the primary particle surface of the silicon carbide to obtain a shape of high sphericity, so that in a mechanical processing method such as a frictional crushing method or a particle collision method, thickening of a dissimilar material in a liquid form caused by the addition of the silicon carbide powder occurs, and there was a risk of a marked increase in the viscosity of the mixture. In addition, in such a mechanical processing method as above, there was a risk that the silicon carbide powder would be contaminated by foreign matters from an apparatus for carrying out the mechanical process, and besides, there was a risk that fine particles such as chippings produced when mechanical energy is added to the primary particles of the silicon carbide would contribute to thickening of the dissimilar material in a liquid form caused by the addition of the silicon carbide powder.

As a method for allowing the primary particles of silicon carbide having a shape of low sphericity to have a shape of high sphericity, granulation and sintering can be thought, but silicon carbide has low sinterability, and therefore, it is thought to be difficult to sufficiently densify the primary particles of the silicon carbide and to allow the particles to have a shape of high sphericity by granulation and sintering.

### Citation List

### Patent Literature

Patent Literature 1: Japanese Patent Laid-Open No. 2013-245374

### SUMMARY OF INVENTION

### Technical Problem

It is an object of the present invention to provide a silicon carbide powder that hardly causes thickening even if it is added to a dissimilar material in a liquid form such as a liquid resin or a molten metal, and a method for producing the same.

### Solution to Problem

The silicon carbide powder according to one embodiment of the present invention is summarized as a silicon carbide powder containing primary particles of silicon carbide having an α-type crystal system, wherein the primary particles of silicon carbide contain, on surfaces thereof, at least one element selected from aluminum, yttrium, and ytterbium, and the Hausner ratio of the silicon carbide powder is 2.1 or less.

The method for producing a silicon carbide powder according to another embodiment of the present invention is summarized as a method comprising mixing a silicon carbide powder that is a raw material and a metal-containing substance, and subjecting the mixed silicon carbide powder that is a raw material and metal-containing substance to heat treatment, wherein the Hausner ratio of the silicon carbide powder after the heat treatment becomes 2.1 or less.

### Effect of Invention

According to the present invention, a silicon carbide powder that hardly causes thickening even if it is added to a dissimilar material in a liquid form such as a liquid resin or a molten metal can be provided.

### DESCRIPTION OF EMBODIMENTS

One embodiment of the present invention will be described in detail. The following embodiment shows an example of the present invention, and the present invention is not limited to the present embodiment. Moreover, it is possible to make various modifications or improvements to the following embodiment, and embodiments to which such modifications or improvements have been made can also be included in the present invention.

The silicon carbide powder according to the present embodiment is a silicon carbide powder containing primary particles of silicon carbide having an α-type crystal system, the primary particles of silicon carbide contain, on surfaces thereof, at least one element selected from aluminum, yttrium, and ytterbium, and the Hausner ratio of the silicon carbide powder is 2.1 or less.

The present inventors have found that a silicon carbide powder containing, on surfaces of primary particles of silicon carbide, at least one element selected from aluminum, yttrium, and ytterbium, and having the Hausner ratio of 2.1 or less tends to hardly cause thickening even if it is added to a dissimilar material in a liquid form (e.g., liquid resin, molten metal). Accordingly, the viscosity of a mixture of the silicon carbide powder according to the present embodiment and a dissimilar material in a liquid form is almost equal to the original viscosity of the dissimilar material in a liquid form, or even if the mixture is thickened, the thickening is unlikely to be significant thickening.

The silicon carbide powder according to the present embodiment preferably contains no granules or no agglomerated particles, and is more preferably composed of primary particles. Since at least one element selected from aluminum, yttrium, and ytterbium is present on the surfaces of the primary particles of silicon carbide contained in the silicon carbide powder according to the present embodiment, the thermal conductivity tends to increase, and when the silicon carbide powder is used as, for example, a filler for a heat dissipation sheet, development of high heat dissipation properties can be expected. The presence of at least one element selected from of aluminum, yttrium, and ytterbium on a surface of the silicon carbide powder of the present embodiment can be judged from the presence or absence of a peak of each element obtained by performing elemental analysis of a surface of a primary particle of the silicon carbide powder that is an object, using a scanning electron microscope and an energy-dispersive X-ray analyzer. Here, the surface means a portion from the outermost surface to the depth of about 5 µm.

The Hausner ratio of the silicon carbide powder according to the present embodiment needs to be 2.1 or less, but may be 1.8 or less, or may be 1.0 or more, and is preferably 1.1 or more.

The Hausner ratio is a ratio of a tap density to an aerated bulk density (i.e., tap density/aerated bulk density). Here, the aerated bulk density is a bulk density obtained when a powder is allowed to fall naturally in a container of a constant volume to fill the container and the container volume is regarded as the powder volume. The tap density is a bulk density obtained when a container is filled with a powder and then mechanically tapped to fill gaps among particles and to perform close packing.

Since the Hausner ratio of the silicon carbide powder according to the present embodiment is as low as 2.1 or less, highly filling in a dissimilar material in a liquid form is possible. Moreover, a mixture of the silicon carbide powder according to the present embodiment and a dissimilar material in a liquid form has good processability when molded.

Accordingly, by adding the silicon carbide powder according to the present embodiment to a dissimilar material in a liquid form, excellent characteristics, such as high thermal conductivity, microwave exothermic characteristics, low specific gravity, low thermal expansion coefficient, and high mechanical characteristics (hardness, rigidity), can be imparted to the dissimilar material in a liquid form. In addition, from a mixture of the silicon carbide powder according to the present embodiment and a dissimilar material in a liquid form, a composite material having the above-mentioned excellent characteristics can be produced.

The dissimilar material in a liquid form to be mixed with the silicon carbide powder according to the present embodiment is not particularly limited, but for example, a liquid resin and a molten metal can be exemplified. Examples of the liquid resins include a silicone resin, an epoxy resin, an acrylic resin, and polyurethane, and examples of the molten metals include aluminum, silicon, copper, magnesium, and alloys containing these metals.

The aerated bulk density and the tap density of the silicon carbide powder according to the present embodiment can be measured based on JIS R 1628. For the aerated bulk density, a metal container is used as a measuring container, and the aerated bulk density is calculated by allowing a powder to fall naturally in the container to introduce the powder into the container until the container is filled, scraping off the powder spilling out from the upper end of the container with a board, then measuring the powder mass, and dividing the powder mass by the powder volume.

The tap density is calculated by introducing a powder sample into a measuring container, then mechanically tapping, measuring the powder mass and the powder volume after the tapping is performed until almost no change in the volume of the powder is observed, and dividing the powder mass by the powder volume. The mechanical tapping is performed by lifting the container up and allowing the container to fall a predetermined distance by its own weight. In order to minimize separation of lumps produced during tapping, it is preferable that the container be able to be rotated during the tapping.

The number of small corners among corners, which a surface of a primary particle of silicon carbide contained in the silicon carbide powder according to the present embodiment has, may be 2.8 or less per primary particle. When the number of small corners among corners, which a surface of a primary particle of silicon carbide contained in the silicon carbide powder has, is 2.8 or less, the shape of the primary particle of silicon carbide becomes a shape of high sphericity, and therefore, even if the silicon carbide powder is added to a dissimilar material in a liquid form, the silicon carbide powder tends to hardly cause thickening. Here, the corner means a point at which a contour line of a primary particle in a projection image of the primary particle changes with an angle, and the angle is more than 0° and less than 180° as an interior angle facing the inside of the contour of the primary particle. The corner may be a corner such that the contour line to form the corner may have a straight line or may have roundness. The small corner is a corner which is present on a contour of the primary particle in the projection image of the primary particle and twice the radius of curvature of which is 1/5 or less of the Heywood diameter of the primary particle in the projection image.

The Heywood diameter is also called a projected area diameter, and means a diameter of a circle having the same area as a projected area of a particle determined by the image analysis. In the powder of silicon carbide according to the present embodiment, the primary particle of silicon carbide becomes a main component material. Further, the primary particle is a unit particle seen from a geometric form of the appearance, and means the independent smallest particle without agglomeration.

The number of small corners which the surface of the primary particle of silicon carbide contained in the silicon carbide powder has can be measured as follows. A powder of silicon carbide is observed using an electron microscope to obtain a secondary electron image of the primary particle of silicon carbide, and image analysis of the secondary electron image is carried out using image analysis software. In the image analysis, a projection image of any one primary particle is acquired from the secondary electron image, and the radius of curvature of a corner present on a contour of the primary particle in the projection image (radius of the largest circle capable of contacting the inside of the corner) is measured.

The shape of the projection image of the primary particle of silicon carbide is approximately polygonal, and a plurality of corners are present on one primary particle, but only the corners between a side and a side of the approximate polygon are subjected to the analysis (measurement of radius of curvature), and a minute unevenness formed in the middle of the side is not subjected to the analysis. This minute unevenness means such a small corner as is unable to be identified as a corner by visual observation in the projection image of the primary particle obtained under the following measurement conditions.

The number of small corners among corners, which the surface of the primary particle of silicon carbide contained in the silicon carbide powder according to the present embodiment has, is measured in accordance with the following steps <1> to <5>.

### [Measurement conditions]

<1> Particle sizes D10%, D50%, and D90% of a silicon carbide powder that is a measurement (analysis) object are measured using a laser diffraction/scattering particle size distribution analyzer LA-300 manufactured by HORIBA Ltd. D10%, D50%, and D90% mean particle sizes at which the cumulative particle volumes from the small particle size side become 10%, 50%, and 90% of the total particle volume, respectively, in the volume-based cumulative particle size distribution, which are measured using a laser diffraction/scattering particle size distribution analyzer LA-300 manufactured by HORIBA Ltd.

When D50% measured using a laser diffraction/scattering particle size distribution analyzer LA-300 manufactured by HORIBA Ltd. is 150 nm or more, D10%, D50%, and D90% are measured using a laser diffraction/scattering particle size distribution analyzer Microtrac MT3300EXII manufactured by Microtrac Corp.

<2> A secondary electron image of a primary particle of silicon carbide is obtained by an electron microscope (manufactured by Thermo Fisher Scientific Inc., Phenom Pro-X tabletop scanning electron microscope, acceleration voltage of electron: 10 kV). The magnification is any one of (i) to (iii) below.
(i) Regarding a powder having D50% of 100 µm or more, the magnification is 300x.
(ii) Regarding a powder having D50% of 40 µm or more and less than 100 µm, the magnification is 1000x.
(iii) Regarding a powder having D50% of less than 40 µm, the magnification is 2000x.

<3> Using image analysis software Mac-View manufactured by Mountech Co., Ltd., image analysis of a secondary electron image is carried out to obtain any 100 or more projection images of primary particles of silicon carbide in the secondary electron image.

<4> Image analysis is further carried out, and regarding the projection image of the primary particle having been subjected to the measurement of radius of curvature of a corner, Heywood diameter R is calculated. That is to say, a diameter of a circle having the same area as the area of the projection image of the primary particle is calculated. Then, regarding the projection image of the primary particle, the number of corners, twice the radius of curvature of which is 1/5 or less of the Heywood diameter R (referred to as "small corner" hereinafter), is measured.

<5> Regarding each of the projection images of a plurality (e.g., 50) of primary particles in the secondary electron image, the same analysis as above is carried out to measure a radius of curvature of a corner and to calculate Heywood diameter R, and the number of small corners is measured. Then, regarding a plurality of primary particles, an average of the numbers of small corners is calculated, and the number of small corners per primary particle is calculated.

In the silicon carbide powder according to the present embodiment, the particle size D50%, at which the cumulative particle volume from the small particle size side in the volume-based cumulative particle size distribution becomes 50% of the total particle volume, may be 1 µm or more, may be 10 µm or more, or may be 15 µm or more. The particle size D50% may be 300 µm or less, or may be 250 µm or less. If the particle size D50% is 1 µm or more, the silicon carbide powder according to the present embodiment tends to hardly cause thickening when the silicon carbide powder is added to a dissimilar material in a liquid form such as a liquid resin or a molten metal. The measurement method for the particle size D50% of the silicon carbide powder according to the present embodiment is not particularly limited, but for example, it can be measured by a laser diffraction/scattering method.

Evaluation of thickening properties of the silicon carbide powder according to the present embodiment can be carried out by measuring a viscosity of a resin composition obtained by mixing the silicon carbide powder and a liquid resin and a viscosity of the liquid resin before mixing, and comparing them. For example, by measuring a viscosity of a resin composition obtained by mixing 73 parts by mass of the silicon carbide powder according to the present embodiment and 27 parts by mass of a silicone resin and a viscosity of only the silicone resin, at a measuring temperature of 25°C and a shear rate of 1 s⁻¹ with a rheometer, and comparing them, the thickening properties of the silicon carbide powder according to the present embodiment can be evaluated. If the silicon carbide powder contains, on its surface, at least one element selected from aluminum, yttrium, and ytterbium and the Hausner ratio of the silicon carbide powder is 2.1 or less, the silicon carbide powder hardly causes thickening even if it is added to a dissimilar material in a liquid form such as a liquid resin or a molten metal.

Evaluation of shear properties of the silicon carbide powder according to the present embodiment can be carried out by measuring a kinetic friction force. For example, regarding the silicon carbide powder in the present embodiment, shear is applied to a static powder layer while a predetermined vertical stress is applied, then a critical state line (CSL) at which the powder layer is collapsed is measured by using a powder layer shear force measuring device manufactured by Nano Seeds Corporation, and a kinetic friction angle between powder layers, which is defined as an angle between the CSL obtained above and the vertical stress axis, can be calculated. Here, CSL is a straight line that passes through an origin with axes of shear stress and vertical stress.

The silicon carbide powder according to the present embodiment contains, as a main component, silicon carbide containing at least one element selected from aluminum, yttrium, and ytterbium on a particle surface, but it may contain an element other than silicon, carbon, aluminum, yttrium, and ytterbium. Examples of the types of element other than the above include beryllium, magnesium, and boron.

The silicon carbide powder of the present embodiment can be produced by a method described below. That is to say, the method is a method for producing a silicon carbide powder, including mixing a silicon carbide powder that is a raw material and a metal-containing substance, and subjecting the mixed silicon carbide powder that is a raw material and metal-containing substance to heat treatment, wherein the Hausner ratio of the silicon carbide powder after the heat treatment becomes 2.1 or less.

According to the method for producing a silicon carbide powder in the present embodiment, the silicon carbide powder according to the present embodiment can be easily produced even if silicon carbide has high hardness.

In the method for producing a silicon carbide powder according to the present embodiment, a silicon carbide powder that hardly causes thickening even if it is added to a dissimilar material in a liquid form can be produced only by mixing a silicon carbide powder that is a raw material and a metal-containing substance and heat-treating them, and therefore, the silicon carbide powder according to the present embodiment can be easily produced as compared with the aforementioned mechanical treatment method in which corners needs to be sufficiently removed from the surface of a primary particle of silicon carbide to obtain a shape of high sphericity.

According to the method for producing a silicon carbide powder of the present embodiment, the silicon carbide powder is hardly contaminated by foreign matters during processing as compared with the aforementioned mechanical treatment method. According to the method for producing a silicon carbide powder of the present embodiment, moreover, fine particles such as chippings are hardly produced in the primary particles of silicon carbide during processing. In addition, in the method for producing a silicon carbide powder according to the present embodiment, the silicon carbide powder according to the present embodiment can be produced by an easy method as compared with the granulation and sintering.

The conditions of the heat treatment are not particularly limited, but the temperature conditions may be 1700°C or more and 2300°C or less, may be 1750°C or more and 2250°C or less, or may be 1800°C or more and 2200°C or less.

The atmosphere in the heat treatment is preferably inert gas atmosphere. The type of the inert gas is not particularly limited, and examples thereof include nitrogen gas, helium, argon, neon, xenon, and krypton.

When the silicon carbide powder according to the present embodiment is produced, a liquid phase forming aid may be mixed as the metal-containing substance with the powder of silicon carbide that is a raw material, and subjected to the heat treatment step. If the liquid phase forming aid is mixed with the silicon carbide powder, the liquid phase forming aid adheres to a surface of the primary particle of silicon carbide. If heat treatment is carried out in a state where the liquid phase forming aid adheres thereto, the liquid phase forming aid and silicon dioxide present on the surface of the primary particle of silicon carbide react with each other at a high temperature to form a melt (liquid phase) of the mixture, and this melt covers the surface of the primary particle of silicon carbide.

Since the surface of the primary particle of the silicon carbide is covered with the melt, atomic diffusion or mass transfer is accelerated, and the silicon carbide dissolves in the melt. By virtue of surface tension of the melt in which silicon carbide has dissolved, the external shape of the primary particle of silicon carbide becomes a shape of high sphericity, and through solidification of the melt, a thin film is formed, so that a primary particle with a shape of high sphericity is obtained.

The types of the metal-containing substance and the liquid phase forming aid that is used as the metal-containing substance are not particularly limited, and examples thereof include an aluminum-containing substance, a yttrium-containing substance, and a ytterbium-containing substance, and examples of the aluminum-containing substance, the yttrium-containing substance, and the ytterbium-containing substance include aluminum salts, yttrium salts, ytterbium salts, aluminum oxide, yttrium oxide, and ytterbium oxide. Specific examples of the aluminum salts include aluminum nitrate (Al(NO₃)₃), aluminum chloride, aluminum sulfate, aluminum acetate, aluminum lactate, and hydrates of these aluminum salts.

In the silicon carbide powder having been subjected to the heat treatment step, primary particles are sometimes agglomerated, and therefore, after the heat treatment step, the silicon carbide powder may be subjected to crushing using a centrifugal crusher or the like or classification using a sieve or the like.

### Examples

The present invention will be described more specifically by showing Examples and Comparative Examples below.

### (Example 1)

100 Parts by mass of a silicon carbide powder having an α-type crystal system and having a particle size D50% of 12 µm and 0.22 parts by mass of aluminum oxide were dry blended to obtain a powder blend. The powder blend obtained was subjected to heat treatment under conditions of a heat treatment temperature of 1830°C, a heat treatment time of 4 hours and heat treatment atmosphere of argon.

In a part of the powder blend after the heat treatment, agglomeration of primary particles took place, so that the powder blend was crushed using a centrifugal crusher and classified (removal of agglomerates) using a sieve having an opening of 32 µm to obtain a silicon carbide powder of Example 1. The rotational speed of the centrifugal crusher is 18000 rpm.

### (Example 2)

A silicon carbide powder of Example 2 was obtained in the same manner as in Example 1, except that a silicon carbide powder having an α-type crystal system and having a particle size D50% of 15 µm was used as a raw material, the heat treatment temperature was set to 1920°C, and the opening of the sieve in the classification was 45 µm.

### (Examples 3, 4)

Silicon carbide powders of Example 3 and Example 4 were produced in the same manner as in Example 2, except that silicon carbide powders having particle sizes D50% that were different from each other were used as raw materials, the rotational speed of the centrifugal crusher was 12000 rpm, and the opening of the sieve in the classification was 53 µm.

### (Example 5)

A silicon carbide powder of Example 5 was produced in the same manner as in Example 1, except that a silicon carbide powder having a particle size D50% of 51 µm was used as a raw material, the heat treatment temperature was set to 2000°C, the rotational speed of the centrifugal crusher was 6000 rpm, the opening of the sieve in the classification was 90 µm, and classification (removal of fine particles) was further carried out using a sieve having an opening of 32 µm.

### (Example 6)

A silicon carbide powder of Example 6 was produced in the same manner as in Example 5, except that a silicon carbide powder having a particle size D50% of 62 µm was used as a raw material, and the heat treatment temperature was set to 2040°C.

### (Example 7)

A silicon carbide powder of Example 7 was produced in the same manner as in Example 4, except that a silicon carbide powder having a particle size D50% of 124 µm was used as a raw material, the heat treatment temperature was set to 21 10°C, the rotational speed of the centrifugal crusher was 6000 rpm, and the opening of the sieve in the classification was 180 µm.

### (Example 8)

A silicon carbide powder of Example 8 was produced in the same manner as in Example 7, except that a silicon carbide powder having a particle size D50% of 240 µm was used as a raw material, the rotational speed of the centrifugal crusher was 8000 rpm, and the classification by the sieve was not carried out.

### (Comparative Example 1)

A silicon carbide powder having an α-type crystal system and having a particle size D50% of 15 µm was prepared, and this was used as a silicon carbide powder of Comparative Example 1.

### (Presence or absence of aluminum element on silicon carbide particle surface)

Elemental analysis of the primary particle surface of the silicon carbide powders obtained in Examples 1 to 8 and Comparative Example 1 was carried out using a scanning electron microscope SU8000 manufactured by Hitachi High-Tech Corporation and an energy-dispersive X-ray analyzer X-Max80 manufactured by Oxford Instruments K.K. When there was a peak assigned to an aluminum element in the resulting spectrum, an aluminum element was judged to be present on the primary particle surface of the silicon carbide powder. These results are set forth in Table 1.

**[Table 1]**

| | Presence or absence of aluminum element on particle surface | Aerated bulk density (g/cm³) | Tap density (g/cm³) | Hausner ratio | Particle size | | | Number of small corners | Kinetic friction angle (°) | Resin composition viscosity (Pa·s) |
|---|---|---|---|---|---|---|---|---|---|---|
| | | | | | D10% (µm) | D50% (µm) | D90% (µm) | | | |
| Example 1 | present | 0.73 | 1.52 | 2.09 | 7.89 | 12.11 | 18.67 | 1.06 | 31.8 | 82.4 |
| Example 2 | present | 1.09 | 1.87 | 1.71 | 11.67 | 18.32 | 29.15 | 1.38 | 32.2 | 23.4 |
| Example 3 | present | 1.18 | 1.90 | 1.61 | 14.70 | 22.96 | 36.68 | 1.40 | 30.5 | 24.3 |
| Example 4 | present | 1.31 | 1.94 | 1.48 | 15.98 | 24.53 | 38.65 | 1.42 | 27.6 | 21.7 |
| Example 5 | present | 1.54 | 1.95 | 1.27 | 35.10 | 53.80 | 86.10 | 0.78 | 25.0 | 40.7 |
| Example 6 | present | 1.64 | 1.96 | 1.20 | 49.17 | 74.96 | 118.92 | 1.38 | 26.9 | 34.4 |
| Example 7 | present | 1.76 | 1.97 | 1.12 | 81.20 | 129.33 | 220.77 | 1.84 | 24.6 | 47.8 |
| Example 8 | present | 1.82 | 1.88 | 1.03 | 165.64 | 233.70 | 320.79 | 2.76 | 22.6 | 54.4 |
| Comparative Example 1 | absent | 1.06 | 1.68 | 1.58 | 9.01 | 15.31 | 25.88 | 1.42 | 33.5 | 353.5 |

### (Hausner ratio)

Using a 30 mL metal container, aerated bulk densities and tap densities of the silicon carbide powders obtained in Examples 1 to 8 and Comparative Example 1 were each measured based on JIS R 1628. In addition, from these measured values, a Hausner ratio (= tap density/aerated bulk density) was calculated. These results are set forth in Table 1.

### (Particle size)

Particles sizes D10%, D50%, and D90% of the silicon carbide powders obtained in Examples 1 to 8 and Comparative Example 1 were measured using a laser diffraction/scattering particle size distribution analyzer LA-300 manufactured by HORIBA Ltd.

When D50% measured using a laser diffraction/scattering particle size distribution analyzer LA-300 manufactured by HORIBA Ltd. was 150 nm or more, D10%, D50%, and D90% were measured using a laser diffraction/scattering particle size distribution analyzer Microtrac MT3300EXII manufactured by Microtrac Corp. These results are set forth in Table 1.

### (Number of small corners per primary particle of silicon carbide powder)

The number of small corners among corners, which a primary particle of silicon carbide contained in the silicon carbide powders obtained in Examples 1 to 8 and Comparative Example 1 had on a surface thereof, was calculated by image analysis of a secondary electron image of the primary particle of silicon carbide. Details will be described below.

In the image analysis, a projection image of any one primary particle is acquired from the secondary electron image, and the radius of curvature of a corner present on a contour of the primary particle in the projection image (radius of the largest circle capable of contacting the inside of the corner) was measured. The shape of the projection image of the primary particle of silicon carbide approximately polygonal, and a plurality of corners present on one primary particle, but only the corners between a side and a side of the approximate polygon subjected to the analysis (measurement of radius of curvature), and a minute unevenness formed in the middle of the side not subjected to the analysis.

Regarding the projection images of the primary particle having been subjected to the measurement of the radius of curvature of the corner, image analysis was further carried out, then the Heywood diameter R was calculated, and the number of small corners, twice the radius of curvature of which was 1/5 or less of Heywood diameter R, was measured.

Regarding each of the projection images of any 50 primary particles in the secondary electron image, the same analysis as above was carried out, to measure the radius of curvature of the corner and to calculate the Heywood diameter R so that the number of small corners was measured. Then, regarding the 50 primary particles, an average of the numbers of small corners was calculated, and the number of small corners per primary particle was calculated. These results are set forth in Table 1.

### (Viscosity of resin composition)

Regarding each of Examples 1 to 8 and Comparative Example 1, 73 Parts by mass of the silicon carbide powder and 27 parts by mass of a silicone resin that was a liquid resin were mixed by stirring with a planetary centrifugal mixer at a rotational speed of 2000 rpm for 2 minutes to prepare a resin composition in slurry form. As the silicone resin, a silicone oil (dimethyl silicone oil, trade name Element 14 PDMS Series) manufactured by Momentive Performance Materials Inc. was used.

The viscosity of the resin composition prepared was measured using Rheometer MCR302 manufactured by Anton Parr GmbH. As a measurement jig of the rheometer, a parallel plate having a diameter of 49.974 mm was used. As the measurement conditions, the measuring temperature was 25°C, the shear rate was 1 s⁻¹, and the gap between the parallel plates was 1 mm. These results are set forth in Table 1.

The viscosity at 25°C of the silicone oil used in the resin composition was measured in the same manner as for the resin composition, and as a result, it was 1.1 Pa·s.

### (Kinetic friction angle)

Regarding the silicon carbide powders of Examples 1 to 8 and Comparative Example 1, the kinetic friction angle was measured using a powder layer shear force measuring device NS-S500 manufactured by Nano Seeds Corporation. Specifically, shear was applied to a static powder layer while a predetermined vertical stress was applied, then a critical state line (CSL) at which the powder layer was collapsed was measured, and a kinetic friction angle between powder layers, which was defined as an angle between the CSL and the vertical stress axis, was calculated. These results are set forth in Table 1.

### (Evaluation)

As shown in Table 1, in Examples 1 to 8 where an aluminum element had been introduced onto the particle surface, thickening caused by the addition of the silicon carbide powder was small, and the viscosity of the resin composition was also low, as compared with Comparative Example 1 where an aluminum element had not been introduced onto the particle surface. Particularly in Examples 2 to 8 where the Hausner ratio was 1.8 or less, thickening caused by the addition of the silicon carbide powder was even small, and the viscosity of the resin composition was as markedly low as 55 Pa·s or less, as compared with Comparative Example 1 where an aluminum element had not been introduced onto the particle surface.

Accordingly, the silicon carbide powders of Examples 1 to 8 are thought to be easy to highly fill into a dissimilar material in a liquid form. In addition, a mixture of any one of the silicon carbide powders of Examples 1 to 8 and a dissimilar material in a liquid form is thought to have good processability during molding.

## Claims

1. A silicon carbide powder comprising primary particles of silicon carbide having an *α-*type crystal system, wherein the primary particles of silicon carbide comprise, on surfaces thereof, at least one element selected from aluminum, yttrium, and ytterbium, and the Hausner ratio of the silicon carbide powder is 2.1 or less.

2. The silicon carbide powder according to claim 1, wherein
the primary particles of silicon carbide comprised in the silicon carbide powder have corners;
the number of small corners among the corners is 2.8 or less per primary particle; and
the small corner is a corner which is present on a contour of the primary particle in the projection image of the primary particle and twice the radius of curvature of which is 1/5 or less of the Heywood diameter of the primary particle in the projection image.

3. The silicon carbide powder according to claim 1 or 2, wherein, in volume-based cumulative particle size distribution, a particle size D50% at which the cumulative particle volume from the small particle size side of the silicon carbide powder becomes 50% of the total particle volume is 1 µm or more.

4. A method for producing a silicon carbide powder, comprising
mixing a silicon carbide powder that is a raw material and a metal-containing substance, and
subjecting the mixed silicon carbide powder that is a raw material and metal-containing substance to heat treatment, wherein
the Hausner ratio of the silicon carbide powder after the heat treatment becomes 2.1 or less.

5. The method for producing a silicon carbide powder according to claim 4, wherein the metal-containing substance comprises at least one element selected from aluminum, yttrium, and ytterbium.
